# EUROPEAN PATENT SPECIFICATION

(11) **EP 1 182 892 B1**
(45) Date of publication and mention of the grant of the patent: **25.02.2004**
(21) Application number: 00650116.7
(22) Date of filing: 25.08.2000
(51) Int. Cl.: H04Q 7/22, H04L 12/18

(54) **A short message method and system**
Verfahren und System für Kurznachrichten
Procédé et système pour messages courts

(43) Date of publication of application: 27.02.2002
(73) Proprietor: Fournir Limited, Dublin 3 (IE)
(72) Inventor: Coghlan, Paul, County Wexford (IE); Boyle, Stephen, County Kildare (IE)
(74) Representative: O'Connor, Donal Henry

(56) References cited:
- EP-A- 0 851 696
- WO-A-97/41654
- WO-A-98/11744
- WO-A-98/47270
- WO-A-99/29128
- US-A- 6 018 654

## Description

### Technical Field

The present invention relates to a method and system for handling short enquiry messages (SEMs) requests in a short messaging system (SMS) having an enquirer communications device for accessing and requesting information content from a content provider datasource.

### Background of the Invention

Short messaging systems (SMS) are being used increasingly, particularly by mobile telephone users. One of their principal uses to date is for sending text messages from one mobile telephone user to another, for example, confirming an appointment, or just simply sending a greeting. Indeed with the next generation of mobile telephone communication based on the WAP system it is envisaged will use SMS and SEMs messages more and more. For example, the WAP system can send a mobile telephone user a regular update of a shares performance on the stock market via a SMS message. WAP services are set to expand. Already, WAP is being used by companies for a Customer Relations Management (CRM) System which allows staff to access, review and update a customer database when out of the office.

Recently due to the explosion of use on the Internet a whole range of information content and services have become available. However, a problem with SEM and SMS messages is that they are limited to 160 characters. Heretofore SMS messages have not been able to access the information content and services now available from the Internet, or indeed other information content providers such as, for example, a weather forecasting service. A problem with SEM messages is that the protocol associated with the message is not compliant with many information content providers. Consequently, the information content providers cannot provide information when requested to SMS and SEM users effectively. Another problem is the handling of SEM messages. Some information content providers do provide SMS services, however, to date, no provider has provided an effective means for handling SMS messages.

New technology has been developed such as WAP, as mentioned above, that enables a user to access information content on the Internet using a communication device. However, a problem with the WAP system is when a user is trying to access information he or she is making a telephone call to the local server be it a local call or long distance call. This has a cost disadvantage for a user who might spend a couple of minutes trying to access information on-line thus incurring considerable charges. This has proved prohibitive for users using WAP based technology.

PCT Publication No. WO 97/41654 discloses a method of disseminating information from at least one information source containing data which is updated continuously or at intervals to subscribers of a telecommunications network by storing customer defined profiles of subscribers of the network, receiving at a message distribution centre data from the information source which is updated continuously or at intervals, processing the data to produce information messages for particular subscribers in accordance with a stored customer defined profile of each customer, transmitting the information messages to particular subscribers in accordance with the stored customer defined profile of each customer. A problem with this PCT publication is that it does not allow a short enquiry message request be sent to a data source, nor is the required data content returned to an enquirer communications device in a readable format in a fast and effective way.

PCT Publication No. WO 9929128 discloses a short message service to implement remote procedure calls in a wireless network. However the architecture disclosed by this publication is complex and does not return the required data content to an enquirer's communication device in a required format in a fast and simple manner.

In this specification, the term communication device relates, not alone to mobile telephones, but is also used to encompass land-line telephones, laptop computers, personal digital accessories (PDAs), personal computers, or any other device that is capable of transmitting electronic data.

### Object of the Invention

The present invention is directed towards providing a method and system which is easy to implement and use for accessing and requesting information content from a content provider datasource using a present standard SMS system.

### Summary of the Invention

According to the present invention there is provided a method of handling short enquiry message (SEM) requests in a short messaging system (SMS) between a content provider datasource and enquirers operating enquirer communications devices within a communications network, said SMS comprising a system processor and a memory having a storage message database and connectivity to one or more networks in which the steps are carried out, on receiving a SEM request, of:-
accepting the SEM;
interpreting the protocol of the SEM;
parsing data of the SEM;
storing the SEM on the message database;
querying the content provider datasource;
interpreting the format of the datasource;
wherein the method comprises the further steps of :
preparing the parsed data retrieved from the SEM and executing the action associated with the SEM format;
formatting the SEM to be readable by the datasource;
sending the formatted SEM to the datasource;
accepting information as a short content message (SCM) from the datasource;
formatting the SCM based on the accepted information:
storing the SCM on the message database;
contacting the enquirer communications device;
on establishing a communications link with the enquirer communications device, transmitting the SCM; and
then deleting the SCM from the message database:
and in which periodically, the message database is polled and the steps are carried out of:-
checking each SEM for which an SCM has not been received;
re-sending the formatted SEM request to the datasource;
checking each SCM which has not been transmitted; and
re-contacting the enquirer communications device to attempt to retransmit the SCM.

The advantage of handling short enquiry message (SEM) requests in this way are twofold. Firstly the invention allows a SEM request be sent to a datasource, the required data content is returned to the enquirer communications device in a readable format in a fast and simple manner. Secondly the invention has the ability to handle the SEM requests and SCMs by periodically polling the message database. This ensures that all SEM requests are dealt with.

Ideally there is stored a plurality of protocols in the SMS so that on receiving an SEM:
the protocols are interpreted;
the specific protocol identified; and
a protocol identifier is added to the label.

Preferably a database of datasource protocols is prepared and the step of querying a datasource comprises querying the protocol database for the protocol and only if the protocol is not stored on the database is the datasource queried directly.

Ideally after the protocol of the SEM is interpreted, the step is carried out of:-
storing the SEM with other SEMs having the same protocol in a separate SMS device memory.

In one embodiement of the invention on interpreting the protocol, the steps are carried out of:-
ascertaining the priority of the SEM;
allocating a priority to the SEM; and
adding the priority to the SEM when labelling the SEM.

Preferably the act of storing the SEMs on the message database includes:-
polling each SEM received to obtain those SEMs with the highest level of priority allocated;
storing these SEMs so that they are processed in order of priority with the highest priority being processed first;
then storing the SEMs with the next highest level of priority until all the SEMs are stored on the message database.

Ideally the invention provides on periodically polling the message database, the SEMs and SCMs are queued in order of the priority allocated for re-sending and re-contacting respectively.

In a further embodiment the priority allocated is determined by the caller ID of the enquirer communications device.

In another embodiment the priority allocated is determined by the datasource ID.

In a still further embodiment the priority allocated is determined by the content of the SEM.

Preferably the enquirer, on sending an SEM, allocates a priority to the SEM and the priority allocated may include a time limit within which a SCM is required or the SEM request is to be cancelled.

Ideally when the time limit expires, the following steps are carried out:-
the SMS contacts the enquirer communications device;
the SMS sends an SMS message detailing reasons for not complying with the SEM;
cancels the SEM; and
enquires whether a new SEM is to be sent.

Preferably on the enquirer requesting a new SEM, a higher or highest priority is allocated to the new SEM.

In a further embodiment when the SEM received includes a condition precedent for transmission of the SEM, the condition precedent is included in the label and the step of sending the formatted SEM request to the datasource is delayed until the condition precedent has occurred.

In another embodiment on checking an SEM for which a response has not been received before re-sending the formatted SEM request to the datasource, the nature of the error causing the previous failure is ascertained and if the error is such that the connection will never be made for that SEM request, the error details are sent to the enquirer and the request terminated.

Preferably when after a predetermined time has elapsed since the SEM has been received and an SCM has not been received from the datasource, the following steps are carried out:-
the SMS contacts the enquirer communications device;
the SMS downloads the error details to the enquirer communications device;
the SMS requests confirmation that the enquirer still requires the SEM to be sent; and
in the absence of a reply, the SEM remains on the storage message database.

Ideally after a further pre-set time, in the absence of an instruction from the enquirer, the request for transmission of the SEM is cancelled by marking it as processed in the storage message database with an appropriate explanation included.

In another embodiment of the present invention there is provided a short messaging system (SMS) for carrying out the method comprising:-
at least one processor,
a plurality of independent SMS devices or network connections;
a storage message database;
at least one content provider datasource;
wherein
the plurality of independent SMS devices are in the form of independently operable processors;
an NT service device controlling the SMS devices and their interaction with a short messaging service centre (SMSC) connected to at least one enquirer communications device in the communications network; and
an information server forming an interface for transmitting short messages between the storage database and the content datasources.

Ideally each SMS device comprises:-
a generic component including its own processor,
a message buffer memory connected to the system processor; and
a protocol specific component including a core protocol component, loaded by the generic component with a desired protocol and communications software for interaction with the SMSC.

Preferably the protocol specific component additionally includes an administrative component comprising:-
display means for property fields required by the protocol for a protocol datablock;
parsing means for the protocol data block; and
communication means for connection to the system processor.

Ideally there is provided an independent process with means for monitoring the status of other processes and means for performing specified actions based on status information retrieved from the other processes.

Preferably when the number of SCMs destined for a particular SMS device exceeds a preconfigured limit, the performance means has means for diverting the SCMs to another SMS device.

### Brief Description of the Drawings

Fig. 1 is a block diagram of the system according to the invention; and
Fig. 2 is a flow chart of how the system works.

### Detailed Description of the Invention

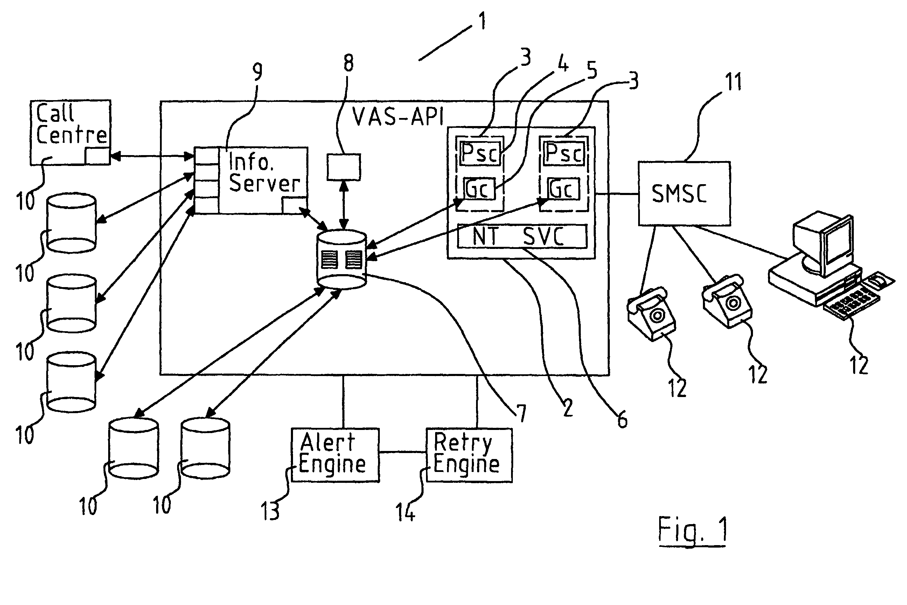

Referring now to Fig. 1 there is illustrated an example of a short messaging system (SMS) for carrying out the invention. The short messaging system comprises a Valued Added Services Application Protocol Interface (VAS API) module 1. The VAS API module 1 comprises a container 2 which houses a number of SMS devices 3, only two of which are shown, but there is no limit on the number that could be incorporated. Indeed in many instances a considerable number will be required. Each SMS device 3 has a protocol specific component 4 and a generic component 5. The SMS devices 3 are controlled by an NT service 6 also housed within the container 2. A message database 7 handles the SMS message queuing for both inbound and outbound messages. In this specification an inbound enquiry message to a content provider datasource is called a Short Enquiry Message (SEM) and the reply a Short Content Message (SCM). An associated system processor 8 processes the data in the queue. An information server 9 parses and formats the data and transmits the data to a desired destination content provider datasource 10. The information server 9 provides the interface with the content provider datasource 10. The content provider datasource 10 is any form of database which has electronic information. Enquirer communication devices 12 send SEMs via a short messaging service centre (SMSC) 11 to the VAS API module 1 from enquirers operating enquirer communications devices 12. The short messaging system can be implemented entirely on a Value Added Services (VAS) platform.

The VAS API module 1 is designed as a distributed system. Each SMS device 3 has a node which operates on the NT service 6. There are three means of communication between the nodes:
1. Database connection
2. SPC-NT service communication
3. TCP/IP connection.

The database connection is the main means of communication between the information server 9 to the message database 7. The VAS-API module 1 connects the information server 9 applications to the message database 7 to be queued. There will be two queues namely an inbound queue of messages waiting to be sent as SEMs to the content provider datasources and an outbound queue of SCMs waiting to be sent to the enquirer communications devices as answers to the SEMs. The SMS devices 3 have a database connection and interact with the queues on the message database 7 through this connection. The NT service 6 has its own database, administration application and a server. The SMS device 3 refers to the NT service 6 , the server assigns a device ID and a specific protocol to the SMS device 3 and interacts directly with the message database 7. The SMS device 3 responds to commands sent to it from the administration application. Communication between the various processes of the VAS-API module 1 is handled by a standard network layer. The interface between the different components is used to convey one function to another component by internal messaging which is termed a "system message". This function contains parameters which contain the source details of the enquirer communication device 12 and the requested content provider datasource 10, routing information, a label, a priority indicator and a string for the SEM message itself. The string will usually contain some descriptive text relating to the message ID. Another different use is to allow protocol specific information to be passed from the administration application to the SMS devices 3.

An alert engine 13 is provided which is configured with a list of actions by an administrator or management system. As will be explained below its function is to query and monitor other components and to receive messages from other components. A retry engine 14 is also provided to control the re-submission of SEM and SCM messages which are not transmitted for some reason, again as with the alert engine 13 its function is described in more detail below.

In operation and referring again to Fig. 1, and taking the example of a motorist with a enquirer communications device 12 driving into a city, who may wish to find the best place to park, but does not know which car-parks are full or not. The motorist sends a SEM message from the enquirer communications device 12 which is routed through the short message service centre (SMSC) 11 which in turn routes the SEM message to the VAS API module 1. The SEM message will contain information such as the ID of the enquirer communication device 12 and the requested content provider datasource number and may have some additional string or text information in the actual message itself requesting more detail. The appropriate SMS device 3 is invoked by the NT service 6. It polls the SMS devices 3 to identify the protocol specific component 4 with the same protocol as the SEM. The protocol specific component 4 of the SMS device 3 takes the information from the SEM message and identifies the protocol specific to the SEM message. The generic component 5 labels the SEM and stores it in the inbound queue of the message database 7. The processor 8 processes the SEM message in the queue. The processed information is then routed to the information server 9. The information server 9 queries the content provider datasource 10 and interprets the processed data which is parsed and formatted into the correct format for sending to the requested content provider datasource 10. In this example, the appropriate content provider datasource 10 is a city corporation database which contains the information on the number of cars in the individual car-parks around the city.

The VAS API module 1 can be connected directly to the content provider datasource 10, or alternatively remotely over a TCP/IP network interface. The formatted SEM request is sent from the information server 9 to the content provider datasource 10. The content provider datasource 10 reads the formatted SEM request and returns the requested information to the information server 9 as a SCM. The information server 9 parses and formats the SCM into the same format as the SEM for which it is the reply. This re-formatted SCM is stored in the outbound message queue of the message database 7. The generic component 5 of the SMS device 3 polls the message database 7 of the message queues for inbound and outbound messages. The SCM message is sent from the outbound queue to the enquirer communication device 12 via the SMS device 3 and the short message service centre (SMSC) 11. The motorist then receives the SCM message providing information as to where is the best available place to park in the city.

The NT service 6 has a number of functions for matching the correct enquirer communication device to the content provider datasource 10. Initially on start up a communication is established with the message database 7. The network layer is initialised and a scan is carried out for SMS devices 3 in the VAS-API 1 to invoke a protocol from the database on the NT service 6 which stores the specific protocols for handling different types of content datasources. Each SMS device 3 is enabled to handle a specific protocol.

The enabled status of the SMS device 3 must be set to true. If it is set to false then an error is returned 'Unable to start device as it is not enabled'. A check is then made of already loaded SMS devices 3, a list is held in the database of the NT service 6. If the details loaded are correct and refer to a currently unloaded SMS device 3 then the rest of the details necessary to invoke a new SMS device 3 are loaded from the NT service 6 database. The protocol name is included in these details. A registry contains the dass name needed by the generic component 5. By searching this section with the protocol name the corresponding dass name should be returned. If there is no entry under the protocol name then the protocol hasn't been installed on that SMS device 3.

The NT service 6 stores each SMS device 3 information in the following manner. If the SMS device 3 starts successfully, a system message is raised with a message identifier of SYSMSG_STARTED. The SMS device 3 is added to the list of active devices held in memory, the 'active' field of that SMS device 3 is set and a system message is returned to the component which sent the original START message. This is achieved by maintaining the reference number sent with the outbound message.

If at any point the protocol specific component 4 is not recognised, the device 3 will shut down. The list of loaded SMS devices 3 is scanned with the passed DevicelD SMS device 3 identifier. One SMS device 3 can store a number of SEM messages having the same protocol in the SMS device 3 memory.

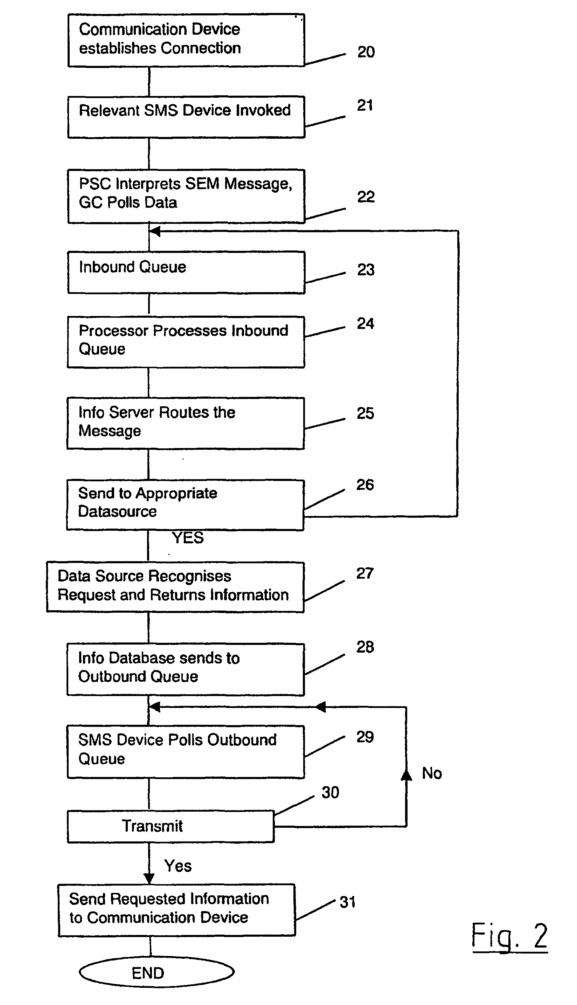

Referring now to Fig. 2 there is illustrated a general flow diagram of how the SEM and SCM messages are handled. In step 20 the enquirer communication device 12 establishes a connection via a short message service centre (SMSC) 11. A SEM message requesting desired information from a particular content provider datasource 10 is sent via the SMSC 11 over a communications network to the VAS API module 1. In steps 21 and 22 the NT service 6 invokes and interprets the SMS device 3 appropriate to the protocol of the SEM using internal system messaging as described earlier. Parameters associated with the SEM message are interpreted. The SMS device 3 is initialised and the protocol specific component 4 accepts the content of the SEM, identifies the enquirer communication device 12 which is labelled and the destination content provider datasource 10. In step 23 the SEM is stored in the message database 7. In step 24 the generic component 5 polls the inbound queue of the message database 7 to send and receive SCM and SEM messages and the processor 8 processes the information providing routing for inbound information for the SEM message. The processor 8 recognises the destination content provider datasource 10 from which information content has been requested by the SEM. In step 25 the processed SEM message is sent to the information server 9. The information server 9 queries the content provider datasource 10. The information server 9 interprets and formats the SEM message into a readable form for the requested content provider datasource 10. The information server 9 has a bank of interfaces each interface being connected to a content provider datasource 10 over a standard TCP/IP network link. In step 26 the SEM is sent to the datasource. If it cannot be sent then it is returned to the inbound queue where it is regularly polled by the SMS device 3 until it can be sent. In essence the link uses the Internet as a vehicle to transmit and receive information. In step 27 the requested content provider datasource 10 recognises the request from the information server 9 needed by the enquirer communication device 12. The content provider datasource 10 transmits the information short content message back to the information server 9 which is accepted by the information server 9. In step 28 the information is formatted into a short content message SCM which is readable by the enquirer communications device 12 and is stored to the outbound queue of the message database 7. The enquirer communications device 12 is contacted by the SMS device 3. In step 29 the generic component 5 polls the outbound queue. In step 30 the SCM content in the outbound queue of the message database 7 is transmitted and subsequently sent to the enquirer communication device 12 via the SMSC 11in step 31 on establishing a communication. Periodically the message database 7 is polled. Each SEM for which an SCM has not been received is checked by the SMS device 3. If the SCM has not been received by the enquirer communications device then the information server 9 re-sends the SEM to the content provider datasource 10. A check is made to ensure the SCM has not already been sent to the outbound queue. The SCM is downloaded to the outbound queue. A connection is reestablished with the enquirer communications device 12 to download the SCM to the device 12.

It will be appreciated in some cases the information server 9 is bypassed completely. All the interpreting, processing and routing is done by the message database 7 and is sent directly to the content provider datasource 10. It will also be appreciated that the queuing of the database may be local or remote.

When polling the message database 7 the SEMs can be polled according to highest level of priority allocated. The SEMs with the highest priority are stored first on the message database 7. This has the advantage that the SEMs with the highest priority are processed first. The SEMs and SCMs can be queried in order of priority when re-sending and re-contacting messages.

The SEM and SCM messages can be polled according to priority. The priority of the message is determined when labelling the SEM. The priority of a message can be indicated by a number of parameters for example, the enquirer communication device 12 ID, the content provider datasource 10 ID, or even by the message content of the SEM or SCM message.

An important aspect of the present invention is the use of the alert engine 13 within the system. The alert engine 13 has two primary functions. It periodically queries the other components in the system. If a component does not respond the alert engine 13 attempts to restart the component, or if configured will invoke the component on to another SMS device 3. The other components of the system notify the alert engine 13 of any significant event. When a component encounters an error or warning it sends a system message to the alert engine 13. The alert engine 13 will reference a list of actions pre-configured by an administrator. If the parameters of the system message match the criteria of a pre-configured alert, then the associated actions are performed. Some examples of actions available are:
(a) Write an entry to a central event log.
(b) Forward the alert to a registered application.
(c) Send an email notification.
(d) Send an SMS notification.
(e) Execute a command line application.

The alert engine 13 ensures that no other component can be held as a single point of failure. The alert engine 13 itself is monitored by the NT service 6 component of each SMS device 3. A procedure can be put in place where the first SMS device determines that the alert engine 13 is not responding, the device is responsible for invoking a new instance of it. The alert engine 13 can instruct one of the SMS devices 3 to take on messages originally bound for another SMS device 3.

The alert engine 13 can be implemented as an independent process which monitors the status of all the other processes in the SMS system. The alert engine 13 can perform specific actions based on status information retrieved from these processes. The status information can either be requested and retrieved from local and remote processes. The status can be interpreted by some of the following indicators:
the unique ID sent in the status response.
the severity level of response which can indicate information, warning and error.
the particular process that sent the response.

A status message can also be generated spontaneously by any active device on the SMS system. These messages are recorded by the monitoring process and are cross referenced with a list of actions which will be performed every time this message is received. These actions may include alerting an external system for example by E-mail, SMS, Paging, WAP or executing an external process, starting an application and stopping or starting devices within the VAS API.

Another aspect of the present invention is the use of the retry engine 14. The retry engine 14 controls the re-submission of SEM and SCM messages. If an SEM or SCM message does not get sent due to a connection failure, the message is allocated to a retry procedure within the retry engine 14. The retry procedure indicates how many times the message should be re-submitted and the intervals between retries. The retry engine 14 scans the outbound queue for failed messages, references the corresponding interval and schedules the message to be sent at a later point in time. A further scan is performed periodically to convert scheduled messages to active queued messages when their schedule time arises. An example of this would be a SEM to be sent at a particular time everyday e.g. a weather forecast request or a SCM such as a stock market price of a share in the event of it rising more than a certain amount.

The retry engine 14 works in the following way. A communication is established with the message database 7 and the retry engine 14. If the database connection fails or there is an unexpected error, the error messages are written to the NT service log of the NT service 6

The initial retry information from the message database 7 is loaded into memory and updates the SMS devices table with its position and port, and sets its active flag to true and sets the timers up. It then sends a message to the alert engine 13 to say it is alive. First a check for failed messages is run, followed by a check for pending messages.

The message database 7 is scanned for failed messages with a retry count (RetryCntCurrent) greater than zero. Each message is checked for the failure code. If the message or one of its parameters was at fault then the message is consigned as a failed message and the number of retries set to zero. If the system was at fault then the retry engine 14 checks the retry scheme associated with the message. When the procedure is then referenced in memory and cross-referenced with the number of retries. The procedure allows the return of an amount of time in minutes. This is added to the current time and the result is entered into the scheduled time. The message is marked as a scheduled message.

The value from field 'RetrySchemelD' is retrieved and the corresponding element is referenced from the previously loaded retry schemes. The 'RetryCnt' is used to reference the next Retry Interval. This Interval is added to the current time and inserted into the field 'TimeScheduled' where the field 'MsgStatus' is set to 'S' for scheduled.

The message database 7 is scanned for messages that are pending with a time queued greater than a preset time value, which is found on the database. The alert engine 13 alerts the retry engine 14 on any device failure or subsequent reactivation. The retry engine 14 keeps these details in memory. When a message is pending for longer than the configured limit the retry engine 14 consults its device status list. If an SMS device 3 is still active, the retry engine 14 assumes that it is overloaded with messages and is experiencing a backlog. If the queued time is greater than the preset threshold but less than the time allowed to clear backlogs then the message is left in the queue. If on the other hand the SMS device 3 associated with the message is listed as inactive, then the retry engine 14 resets the status of the message to Queued. If the SMS device 3 listed as the default device for the message is not in the device table, an error is sent to the alert engine 13. This is important for load balancing of the system.

It is preferably that each device 3 will have a backup or secondary device. This device will be looking for queued messages destined for the failed device and will pick up these messages once the status has been reset in the message database 7 by the retry engine 14. When the service is stopped, the devices table on the database 7 is updated, telling it that the service has stopped, and the alert engine 13 is pinged, telling it the service has stopped. If an error is encountered updating the message database 7, an error message is sent to the alert engine 13.

The NT service 6 has a database of datasource protocols. This database can be queried if the protocol is not available at the content provider datasource 10.

The protocol specific component 4 can download the protocol specific to enquirer communications device 10 if necessary. In another instance the protocol is loaded but the version number is changed, i.e. a newer version has been loaded into the system. In this case the name of the protocol is returned, but a warning stating that a newer version exists in the system is given. The enquirer can then choose to call on the protocol specific component 4 to download the protocol or latest version of the protocol to the enquirer communications device.

The protocol specific component 4 contains two elements, the first a core protocol component and the second is the administrative component mentioned earlier. The core protocol component is loaded by the generic component 5 of the SMS device 3. This contains the specific information needed to make a connection. The properties required by the core protocol component are passed to the generic component 5 for storage in a single datablock. The generic component 5 does not need to know how this block is passed, only that it will need to pass it back to the protocol component on initialisation. The administrative component is a control which is determined by an administrator. It can also pass the properties datablock. It also gives the capability to send real time queries and information to the core component and to the generic component.

The information server 9 can provide added security features within the system. The system has a tree-like structure in which the information server 9 can provide a login password and application name before performing any other action. The structure exposes properties and methods that reflect functional elements of the system only. All database access and inter-process interaction are hidden from the content provider datasource 10. This has the advantage that the system is user friendly. The system can be configured to send a system message to any registered application attached to the system via the VAS API module 1. The content provider datasource 10 application may also send a message. The VAS API module 1 is designed to allow a datasource application to interact in a minimal manner, or take control of several components within the system and allows significant integration with the datasource system.

It will be appreciated that the SMS device 3 may be in the form of a card device storing the protocol specific component 4 and the generic component 5. This card may be easily pluggable into any system allowing for system upgrading and easy scalability. It is envisaged that the protocol specific component 4 and the generic component 5 can be implemented in software.

It will also be appreciated that initially when an SEM is labelled a condition precedent for transmission can be added to the label. This has the advantage that certain SEM messages are sent when the condition precedent has occurred.

It will be appreciated that the invention may incorporate two alert engines with one alert engine not active, which can be used as a back up if the other alert engine should fail.

In this specification we have talked about SEM and SCM messages only as it is a particularly suitable version of SMS messaging, but the invention could also be used to encompass Web or WAP based technology.

The applications of the present invention can be used in many areas, for example, for bus and train times, booking information, concert information, weather forecasting, airline tickets, etc.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A method of handling short enquiry message (SEM) requests in a short messaging system (SMS) between a content provider datasource (10) and enquirers operating enquirer communications devices (12) within a communications network, said SMS comprising a system processor (8) and a memory having a storage message database (7) and connectivity to one or more networks in which the steps are carried out, on receiving a SEM request, of:-
accepting the SEM;
interpreting the protocol of the SEM;
parsing data of the SEM;
storing the SEM on the message database (7);
querying the content provider datasource (10);
interpreting the format of the datasource (10);
**characterised in that** the method comprises the further steps of :
preparing the parsed data retrieved from the SEM and executing the action associated with the SEM format;
formatting the SEM to be readable by the datasource (10);
sending the formatted SEM to the datasource (10);
accepting information as a short content message (SCM) from the datasource (10);
formatting the SCM based on the accepted information;
storing the SCM on the message database (7);
contacting the enquirer communications device (12);
on establishing a communications link with the enquirer communications device (12), transmitting the SCM; and
then deleting the SCM from the message database (7):
and in which periodically, the message database (7) is polled and the steps are carried out of:-
checking each SEM for which an SCM has not been received;
re-sending the formatted SEM request to the datasource (10);
checking each SCM which has not been transmitted; and
re-contacting the enquirer communications device (12) to attempt to re-transmit the SCM.

2. A method as claimed in claim 1, in which there is stored a plurality of protocols in the SMS so that on receiving an SEM:
the protocols are interpreted;
the specific protocol identified; and
a protocol identifier is added to the label.

3. A method as claimed in claim 1 or 2, in which a database of datasource protocols is prepared and the step of querying a datasource (10) comprises querying the protocol database for the protocol and only if the protocol is not stored on the database is the datasource queried directly.

4. A method as claimed in any preceding claim, in which after the protocol of the SEM is interpreted, the step is carried out of:-
storing the SEM with other SEMs having the same protocol in a separate SMS device memory.

5. A method as claimed in any preceding claim, in which on interpreting the protocol, the steps are carried out of:-
ascertaining the priority of the SEM;
allocating a priority to the SEM; and
adding the priority to the SEM when labelling the SEM.

6. A method as daimed in any preceding claim, in which the act of storing the SEMs on the message database (7) includes:-
polling each SEM received to obtain those SEMs with the highest level of priority allocated;
storing these SEMs so that they are processed in order of priority with the highest priority being processed first;
then storing the SEMs with the next highest level of priority until all the SEMs are stored on the message database.

7. A method as claimed in claim 5 or 6, in which on periodically polling the message database (7), the SEMs and SCMs are queued in order of the priority allocated for re-sending and re-contacting respectively.

8. A method as claimed in any of claims 5 to 7, in which the priority allocated is determined by the caller ID of the enquirer communications device (12).

9. A method as claimed in any of claims 5 to 7, in which the priority allocated is determined by the datasource (10) ID.

10. A method as claimed in any of claims 5 to 7, in which the priority allocated is determined by the content of the SEM.

11. A method as claimed in any of claims 5 to 7, in which the enquirer, on sending an SEM, allocates a priority to the SEM.

12. A method as claimed in claim 11, in which the priority allocated includes a time limit within which a SCM is required or the SEM request is to be cancelled.

13. A method as claimed in claim 12, in which when the time limit expires, the following steps are carried out:-
the SMS contacts the enquirer communications device (12);
the SMS sends an SMS message detailing reasons for not complying with the SEM;
cancels the SEM; and
enquires whether a new SEM is to be sent.

14. A method as claimed in claim 13, in which, on the enquirer requesting a new SEM, a higher or highest priority is allocated to the new SEM.

15. A method as claimed in any preceding claim, in which when the SEM received includes a condition precedent for transmission of the SEM, the condition precedent is included in the label and the step of sending the formatted SEM request to the datasource (10) is delayed until the condition precedent has occurred.

16. A method as claimed in any preceding claim, in which, on checking an SEM for which a response has not been received before re-sending the formatted SEM request to the datasource (10), the nature of the error causing the previous failure is ascertained and if the error is such that the connection will never be made for that SEM request, the error details are sent to the enquirer and the request terminated.

17. A method as claimed in any preceding claim, in which, when after a predetermined time has elapsed since the SEM has been received and an SCM has not been received from the datasource (10), the following steps are carried out:-
the SMS contacts the enquirer communications device (12);
the SMS downloads the error details to the enquirer communications device (12);
the SMS requests confirmation that the enquirer still requires the SEM to be sent; and
in the absence of a reply, the SEM remains on the storage message database (7).

18. A method as claimed in claim 17, in which after a further pre-set time, in the absence of an instruction from the enquirer, the request for transmission of the SEM is cancelled by marking it as processed in the storage message database (7) with an appropriate explanation included.

19. A short messaging system (SMS) for carrying out the method as claimed in any preceding claim comprising:-
at least one processor (8);
a plurality of independent SMS devices (3) or network connections;
a storage message database (7);
at least one content provider datasource (10);
**characterized in that**
the plurality of independent SMS devices (3) are in the form of independently operable processors;
and by
an NT service device (5) controlling the SMS devices (3) and their interaction with a short messaging service centre (SMSC) connected to at least one enquirer communications device (12) in the communications network; and
an information server (9) forming an interface for transmitting short messages between the storage message database (7) and the content datasources (10).

20. An SMS as claimed in claim 19, in which each SMS device (3) comprises:-
a generic component including its own processor;
a message buffer memory connected to the system processor; and
a protocol specific component including a core protocol component, loaded by the generic component with a desired protocol and communications software for interaction with the SMSC.

21. An SMS as claimed in claim 20, in which the protocol specific component additionally includes an administrative component comprising:-
display means for property fields required by the protocol for a protocol datablock;
parsing means for the protocol data block; and
communication means for connection to the system processor (8).

22. An SMS as claimed in claims 19 to 21 wherein there is provided an independent process with means for monitoring the status of other processes and means for performing specified actions based on status information retrieved from the other processes.

23. An SMS as claimed in claim 22 wherein when the number of SCMs destined for a particular SMS device exceeds a preconfigured limit, the performance means has means for diverting the SCMs to another SMS device.

## Patentansprüche

1. Verfahren zum Verarbeiten von SEM- (Short Enquiry Message = Kurzanfragenachricht) Anforderungen in einem Kurznachrichtensystem (SMS) zwischen einer Inhaltsanbieter-Datenquelle (10) und Anfragern, die Anfragerkommunikationsgeräte (12) in einem Kommunikationsnetz betreiben, wobei das genannte SMS einen Systemprozessor (8) und einen Speicher mit einer Speichernachrichtendatenbank (7) und Konnektivität mit einem oder mehreren Netzwerken umfasst, in denen nach dem Empfang einer SEM-Anforderung die folgenden Schritte durchgeführt werden:
Akzeptieren der SEM;
Interpretieren des Protokolls der SEM;
Parsen von Daten der SEM;
Speichern der SEM in der Meldungsdatenbank (7);
Abfragen der Inhaltsanbieter-Datenquelle (10);
Interpretieren des Formats der Datenquelle (10);
**dadurch gekennzeichnet, dass** das Verfahren ferner die folgenden Schritte umfasst:
Vorbereiten der geparsten Daten, die von der SEM abgerufen wurden, und
Ausführen der Tätigkeit in Verbindung mit dem SEM-Format;
Formatieren der SEM, so dass sie von der Datenquelle (10) gelesen werden kann;
Senden der formatierten SEM zur Datenquelle (10);
Akzeptieren von Informationen als Kurzinhaltsnachricht (SCM) von der Datenquelle (10);
Formatieren der SCM auf der Basis der akzeptierten Informationen;
Speichern der SCM in der Meldungsdatenbank (7);
Kontaktieren des Anfragerkommunikationsgerätes (12);
beim Herstellen einer Kommunikationsverbindung mit dem Anfragerkommunikationsgerät (12), Senden der SCM; und
anschließend Löschen der SCM aus der Meldungsdatenbank (7);
und wobei die Meldungsdatenbank (7) periodisch abgefragt wird und die folgenden Schritte durchgeführt werden:
Prüfen jeder SEM, für die keine SCM empfangen wurde;
Neusenden der formatierten SEM-Anforderung zur Datenquelle (10);
Prüfen jeder SCM, die nicht gesendet wurde; und
Neukontaktieren des Anfragerkommunikationsgerätes (12), um zu versuchen, die SCM neu zu senden.

2. Verfahren nach Anspruch 1, bei dem eine Mehrzahl von Protokollen im SMS gespeichert wird, so dass nach dem Empfang einer SEM:
die Protokolle interpretiert werden;
das spezifische Protokoll identifiziert wird; und
dem Etikett eine Protokollkennung hinzugefügt wird.

3. Verfahren nach Anspruch 1 oder 2, bei dem eine Datenbank von. Datenquellenprotokollen erstellt wird und der Schritt des Abfragens einer Datenquelle (10) das Abfragen der Protokoll datenbank nach dem Protokoll umfasst, und nur dann, wenn das Protokoll nicht in der Datenbank gespeichert ist, die Datenquelle direkt abgefragt wird.

4. Verfahren nach einem der vorherigen Ansprüche, bei dem nach dem Interpretieren des Protokolls der SEM der folgende Schritt durchgeführt wird:
Speichern der SEM mit anderen SEMs mit demselben Protokoll in einem separaten SMS-Gerätespeicher.

5. Verfahren nach einem der vorherigen Ansprüche, bei dem nach dem Interpretieren des Protokolls die folgenden Schritte durchgeführt werden:
Feststellen der Priorität der SEM;
Zuordnen einer Priorität zu der SEM; und
Hinzufügen der Priorität zu der SEM beim Etikettieren der SEM.

6. Verfahren nach einem der vorherigen Ansprüche, bei dem die Tätigkeit des Speicherns der SEMs in der Meldungsdatenbank (7) Folgendes umfasst:
Abfragen jeder erhaltenen SEM, um die SEMs mit der höchsten zugeordneten Prioritätsstufe zu erhalten;
Speichern dieser SEMs, so dass sie in der Prioritätsfolge verarbeitet werden, wobei die höchste Priorität zuerst verarbeitet wird;
anschließend Speichern der SEMs mit der nächsthöheren Prioritätsstufe, bis alle SEMs auf der Meldungsdatenbank gespeichert sind.

7. Verfahren nach Anspruch 5 oder 6, bei dem bei periodischem Abfragen der Meldungsdatenbank (7) die SEMs und SCMs in der Reihenfolge der Priorität. in die Warteschlange eingeordnet werden; die jeweils zum Neusenden und Neukontaktieren zugeordnet ist.

8. Verfahren nach einem der Ansprüche 5 bis 7, bei dem die zugeordnete Priorität anhand der Rufer-ID des Anfragerkommunikationsgerätes (12) bestimmt wird.

9. Verfahren nach einem der Ansprüche 5 bis 7, bei dem die zugeordnete Priorität anhand der ID der Datenquelle (10) ermittelt wird.

10. Verfahren nach einem der Ansprüche 5 bis 7, bei dem die zugeordnete Priorität anhand des Inhalts der SEM ermittelt wird.

11. Verfahren nach einem der Ansprüche 5 bis 7, bei dem der Anfrager nach dem Senden einer SEM der SEM eine Priorität zuordnet.

12. Verfahren nach Anspruch 11, bei dem die zugeordnete Priorität eine Zeitgrenze beinhaltet, innerhalb derer eine SCM benötigt wird oder die SEM-Anforderung storniert werden muss.

13. Verfahren nach Anspruch 12, bei dem, wenn die Zeitgrenze abläuft, die folgenden Schritte durchgeführt werden:
das SMS kontaktiert das Anfragerkommunikationsgerät (12);
das SMS sendet eine SMS-Nachricht, die Gründe für die Nichterfüllung der SEM angibt;
Stornieren der SEM; und
Anfragen, ob eine neue SEM gesendet werden soll.

14. Verfahren nach Anspruch 13, bei dem nach der Anforderung einer neuen SEM durch den Anfrager der neuen SEM eine höhere oder höchste Priorität zugeordnet wird.

15. Verfahren nach einem der vorherigen Ansprüche, bei dem dann, wenn die empfangene SEM eine Vorbedingung für das Übertragen der SEM beinhaltet, die Vorbedingung in dem Etikett enthalten ist und der Schritt des Sendens der formatierten SEM-Anforderung zur Datenquelle (10) so lange verzögert wird, bis die Vorbedingung eingetreten ist.

16. Verfahren nach einem der vorherigen Ansprüche, bei dem nach dem Checken einer SEM, für die keine Antwort empfangen wurde, bevor die formatierte SEM-Anforderung zur Datenquelle (10) neu gesendet wird, die Art des die vorherige Störung verursachenden Fehlers festgestellt wird, und wenn der Fehler derart ist, dass die Verbindung niemals für diese SEM-Anforderung hergestellt werden wird, die Fehlerdetails zum Anfrager gesendet werden und die Anforderung terminiert wird.

17. Verfahren nach einem der vorherigen Ansprüche, bei dem, wenn nach Ablauf einer vorbestimmten Zeit nach dem Empfang der SEM noch keine SCM von der Datenquelle (10) eingegangen ist, die folgenden Schritte durchgeführt werden:
das SMS kontaktiert das Anfragerkommunikationsgerät (12);
das SMS lädt die Fehlerdetails auf das Anfragerkommunikationsgerät (12) herunter;
das SMS fordert eine Bestätigung an, ob der Anfrager noch will, dass die SEM gesendet wird; und
in Abwesenheit einer Antwort bleibt die SEM in der Speichermeldungsdatenbank (7) gespeichert.

18. Verfahren nach Anspruch 17, bei dem nach einer weiteren voreingestellten Zeit in Abwesenheit einer Anweisung vom Anfrager die Anforderung auf Übertragung der SEM storniert wird, indem sie, zusammen mit einer entsprechenden Erläuterung, als in der Speichermeldungsdatenbank (7) verarbeitet markiert wird.

19. Kurznachrichtensystem (SMS) zum Durchführen des Verfahrens nach einem der vorherigen Ansprüche, das Folgendes umfasst:
wenigstens einen Prozessor (8);
eine Mehrzahl von unabhängigen SMS-Geräten (3) oder Netzverbindungen;
eine Speichermeldungsdatenbank (7);
wenigstens eine Inhaltsanbieter-Datenquelle (10);
**dadurch gekennzeichnet, dass** die Mehrzahl unabhängiger SMS-Geräte (3) die Form von unabhängig funktionsfähigen Prozessoren haben; und durch:
ein NT-Service-Gerät (5), das die SMS-Geräte (3) und deren Interaktion mit einer Kurznachrichtenservicezentrale (SMSC) steuert, die mit wenigstens einem Anfragerkommunikationsgerät (12) auf dem Kommunikationsnetz verbunden ist; und
einen Informationsserver (9), der eine Schnittstelle zum Übertragen von Kurznachrichten zwischen der Speichermeldungsdatenbank (7) und den Inhaltsdatenquellen (10) bildet.

20. SMS nach Anspruch 19, wobei jedes SMS-Gerät (3) Folgendes umfasst:
eine generische Komponente mit ihrem eigenen Prozessor;
einen Meldungspufferspeicher, der mit dem Systemprozessor verbunden ist; und
eine protokollspezifische Komponente mit einer Kemprotokollkomponente, die von der generischen Komponente mit einem gewünschten Protokoll und Kommunikationssoftware für die Interaktion mit der SMSC geladen wird.

21. SMS nach Anspruch 20, wobei die protokollspezifische Komponente zusätzlich eine administrative Komponente beinhaltet, die Folgendes umfasst:
Anzeigemittel für Eigenschaftsfelder, die das Protokoll für einen Protokolldatenblock benötigt;
Parsing-Mittel für den Protokolldatenblock; und
Kommunikationsmittel für die Verbindung mit dem Systemprozessor (8).

22. SMS nach den Ansprüchen 19 bis 21, wobei ein unabhängiges Verfahren mit Mitteln zum Überwachen des Zustands anderer Prozesse und Mitteln zum Durchführen vorgegebener Aktionen auf der Basis von Statusinformationen vorgesehen ist, die von den anderen Prozessen abgerufen werden.

23. SMS nach Anspruch 22, bei dem, wenn die Zahl der SCMs, die für ein bestimmtes SMS-Gerät bestimmt sind, eine vorkonfigurierte Grenze überschreitet, das Durchführungsmittel Mittel zum Umleiten der SCMs zu einem anderen SMS-Gerät hat.

## Revendications

1. Une méthode pour traiter des demandes sous la forme de messages courts d'interrogation (SEM) dans un système de messages courts (SMS) entre une source de données d'un fournisseur de contenu (10) et des interrogateurs utilisant des dispositifs de communication d'interrogateurs (12) au sein d'un réseau de communication, ledit SMS comportant un processeur système (8) et une mémoire possédant une base de données de messages de stockage (7) et un moyen de connexion avec un ou plusieurs réseaux, suivant laquelle, sur réception d'une demande de SEM, les étapes suivantes sont effectuées :
accepter le SEM ;
interpréter le protocole du SEM ;
analyser les données du SEM ;
enregistrer le SEM dans la base de données de messages (7) ;
interroger la source de données du fournisseur de contenu (10) ;
interpréter le format de la source de données (10) ;
**caractérisée par le fait que** la méthode comporte, en outre, les étapes suivantes :
préparer les données analysées récupérées du SEM et exécuter l'action associée au format du SEM ;
formater le SEM pour qu'il soit lisible par la source de données (10) ;
envoyer le SEM formaté à la source de données (10) ;
accepter les informations sous la forme d'un message court de contenu (SCM) venant de la source de données (10) ;
formater le SCM sur la base des informations acceptées ;
enregistrer le SCM dans la base de données de messages (7) ;
contacter le dispositif de communication d'interrogateur (12) ;
lorsqu'une liaison de communication est établie avec le dispositif de communication d'interrogateur (12), transmettre le SCM ; et
effacer le SCM de la base de données de messages (7) ;
et suivant laquelle, périodiquement, la base de données de messages (7) est consultée et les étapes suivantes effectuées :
contrôler chaque SEM pour lesquels un SCM n'a pas été reçu ;
renvoyer la demande de SEM formatée à la source de données (10) ;
contrôler chaque SCM qui n'a pas été transmis ; et
recontacter le dispositif de communication d'interrogateur (12) pour essayer de retransmettre le SCM.

2. Une méthode telle que revendiquée à la revendication 1, suivant laquelle plusieurs protocoles sont enregistrés dans le SMS de façon que, dès réception d'un SEM :
les protocoles soient interprétés ;
le protocole spécifique soit identifié ; et
une identification de protocole soit ajoutée au titre.

3. Une méthode telle que revendiquée à la revendication 1 ou 2, suivant laquelle une base de données de protocoles de sources de données est préparée, et l'étape d'interrogation d'une source de données (10) met enjeu l'interrogation de la base de données de protocoles pour y trouver le protocole et, seulement si le protocole n'est pas enregistré dans la base de données, la source de données sera interrogée directement.

4. Une méthode telle que revendiquée dans une quelconque des revendications précédentes, suivant laquelle, après interprétation du protocole du SEM, l'étape suivante est effectuée :
enregistrer le SEM avec d'autres SEM ayant le même protocole dans une mémoire séparée de dispositif SMS.

5. Une méthode telle que revendiquée dans une quelconque des revendications précédentes, suivant laquelle, une fois le protocole interprété, les étapes suivantes sont effectuées :
déterminer la priorité du SEM ;
attribuer une priorité au SEM ; et
ajouter la priorité au SEM au moment de lui attribuer un titre.

6. Une méthode telle que revendiquée dans une quelconque des revendications précédentes, suivant laquelle l'action d'enregistrer les SEM dans la base de données de messages (7) met en jeu:
consulter chaque SEM reçu pour obtenir les SEM auxquels la priorité la plus élevée a été attribuée ;
enregistrer ces SEM de façon qu'ils soient traités suivant leur priorité, la priorité la plus haute étant traitée en premier ;
puis enregistrer les SEM avec le niveau suivant de priorité jusqu'à ce que tous les SEM soient enregistrés dans la base de données de messages.

7. Une méthode telle que revendiquée dans la revendication 5 ou 6, suivant laquelle, lors de la consultation périodique de la base de données de messages (7), les SEM et SCM sont mis en file d'attente dans l'ordre de la priorité attribuée lorsqu'il s'agit respectivement de renvoyer et de recontacter.

8. Une méthode telle que revendiquée dans l'une quelconque des revendications 5 à 7, suivant laquelle la priorité attribuée est déterminée par l'identité d'appelant du dispositif de communication d'interrogateur (12).

9. Une méthode telle que revendiquée dans l'une quelconque des revendications 5 à 7, suivant laquelle la priorité attribuée est déterminée par l'identité de source de données (10).

10. Une méthode telle que revendiquée dans l'une quelconque des revendications 5 à 7, suivant laquelle la priorité attribuée est déterminée par le contenu du SEM.

11. Une méthode telle que revendiquée dans l'une quelconque des revendications 5 à 7, suivant laquelle l'interrogateur attribue une priorité au SEM lorsqu'il envoie celui-ci.

12. Une méthode telle que revendiquée dans la revendication 11, suivant laquelle la priorité attribuée comporte un délai dans lequel un SCM est requis ou la demande de SEM doit être annulée.

13. Une méthode telle que revendiquée dans la revendication 12, suivant laquelle les étapes suivantes sont effectuées à l'issue du délai :
le SMS contacte le dispositif de communication d'interrogateur (12) ;
le SMS envoie un message SMS détaillant les raisons pour lesquelles il n'a pas pu donner suite au SEM ;
annule le SEM ; et
demande si un nouveau SEM doit être envoyé.

14. Une méthode telle que revendiquée dans la revendication 13, suivant laquelle, lorsque l'interrogateur demande un nouveau SEM, une priorité plus haute ou maximale est attribuée au nouveau SEM.

15. Une méthode telle que revendiquée dans une quelconque des revendications précédentes, suivant laquelle, quand le SEM reçu comporte une condition préalable à la transmission du SEM, ladite condition préalable est incluse dans le titre et l'étape d'envoi de la demande du SEM formaté à la source de données (10) est reportée jusqu'à ce que la condition préalable se soit produite.

16. Une méthode telle que revendiquée dans une quelconque des revendications précédentes, suivant laquelle, lors du contrôle d'un SEM n'ayant pas reçu de réponse, avant de renvoyer la demande de SEM formaté à la source de données (10), la nature de l'erreur déclenchant l'échec précédent est déterminée et si cette erreur est telle que la connexion ne sera jamais effectuée pour cette demande de SEM, les détails d'erreur sont transmis à l'interrogateur et la demande est clôturée.

17. Une méthode telle que revendiquée dans une quelconque des revendications précédentes, suivant laquelle, lorsqu'un SCM n'a pas été reçu de la source de données (10) à l'issue d'une période prédéterminée depuis la réception du SEM, les étapes suivantes sont effectuées :
le SMS contacte le dispositif de communication d'interrogateur (12) ;
le SMS télécharge les détails d'erreurs au dispositif de communication d'interrogateur (12) ;
le SMS demande à l'interrogateur de confirmer qu'il souhaite toujours que le SEM soit envoyé ; et
en l'absence d'une réponse, le SEM reste sur la base de données de messages de stockage (7).

18. Une méthode telle que revendiquée dans la revendication 17, suivant laquelle, à l'issue d'une période prédéterminée, en l'absence d'une instruction de l'interrogateur, la demande de transmission du SEM est annulée en étant marquée comme traitée avec une explication appropriée dans la base de données de messages de stockage (7).

19. Un système de messages courts (SMS) pour appliquer la méthode telle que revendiquée dans une quelconque des revendications précédentes, comportant :
au moins un processeur (8) ;
plusieurs dispositifs SMS indépendants (3) ou connexions réseau ;
une base de données de messages de stockage (7) ;
au moins une source de données de fournisseur de contenu (10) ;
**caractérisé par le fait que** :
les plusieurs dispositifs SMS (3) indépendants se présentent sous la forme de processeurs indépendamment exploitables ;
et **par le fait que** :
un dispositif de service NT (5) gère les dispositifs SMS (3) et leur interaction avec un centre de service de messages courts (SMSC) connecté à au moins un dispositif de communication d'interrogateur (12) sur le réseau de communications ; et
un serveur d'informations (9) assurant une interface pour transmettre des messages courts entre la base de données de messages de stockage (7) et les sources de données de contenu (10).

20. Un SMS tel que revendiqué dans la revendication 19, dans lequel chaque dispositif de SMS (3) se compose :
d'un composant générique comportant son propre processeur ;
d'une mémoire tampon de messages connectée au processeur système ; et
d'un composant spécifique aux protocoles comportant un composant central de protocoles dans lequel le composant générique charge un logiciel adéquat de protocoles et communications pour l'interaction avec le SMSC.

21. Un SMS tel que revendiqué dans la revendication 20, dans lequel le composant spécifique aux protocoles comporte en outre un composant administratif constitué :
d'un moyen d'affichage pour les champs de propriété requis par le protocole pour un bloc de données de protocole ;
un moyen d'analyse pour le bloc de données de protocole ; et
un moyen de communication pour se connecter au processeur système (8).

22. Un SMS tel que revendiqué dans les revendications 19 à 21 prévoyant un processus indépendant avec un moyen de contrôler l'état d'autres processus et un moyen de réaliser des actions spécifiques basées sur les informations d'état récupérées des autres processus.

23. Un SMS tel que revendiqué dans la revendication 22, dans lequel, lorsque le nombre de SCM destiné à un dispositif SMS particulier dépasse une limite préconfigurée, le moyen de réaliser des actions a des moyens capables de dévier les SCM vers un autre dispositif SMS.
